# EUROPEAN PATENT APPLICATION

(11) **EP 1 914 965 A1**
(43) Date of publication of application: **23.04.2008**
(21) Application number: 07020301.3
(22) Date of filing: 17.10.2007
(51) Int. Cl.: H04M 1/22, H04M 1/247, G06F 3/048

(54) **Terminal having color changing function and color changing method thereof**

(30) Priority: 20.10.2006 KR 20060102495
(71) Applicant: LG Electronics, Inc., Seoul 150-010 (KR)
(72) Inventor: Kwak, Jae Do, Seoul 135-080 (KR); Lee, Sang Hyuck, Seoul 151-019 (KR)
(74) Representative: Katérle, Axel

(57) **Abstract**

A mobile communication terminal having a color changing function and its color changing method are disclosed. By changing an illumination color of a key input unit, a user can recognize an operation state of the terminal by intuition through the illumination color. In addition, because the key arrangement of the key input unit can be simplified, the terminal can become more compact.

## Description

This nonprovisional application claims priority under 35 U.S.C. §119(a) on Patent Application No. 2006-102495 filed in Republic of Korea on October 20, 2006, the entire contents of which are hereby incorporated by reference.

### BACKGROUND OF THE INVENTION

### 1. Field of the Invention

The present invention relates to a terminal having a color changing function and its color changing method, and more particularly, to a terminal having a color changing function capable of simplifying a user interface by changing color of a keypad of the terminal according to displayed image, and its color changing method.

### 2. Description of the Related Art

A terminal, one of electronic devices, is becoming smaller and fabricated to have diverse functions. The commonly used terminals may include, for example, a mobile communication terminal, an MP3 player terminal, a PDA terminal, and a navigator terminal, etc., but the terminals are not limited thereto.

In particular, in case of the mobile communication terminal having various multimedia functions such as an MP3 player or a digital camera in addition to its inherent function as a mobile phone, its user can have the same benefits as he/she uses various electronic devices through the single electronic device.

Thus, as the functions of the mobile communication terminal are being diversified, various control commands are supposed to be inputted to the mobile communication terminal. In addition, if the user of the mobile communication terminal may recognize functions performed by the mobile communication terminal by intuition, he/she could more effectively use the mobile communication terminal.

However, in line with the tendency that the mobile communication terminal becomes compact, substantially, the number of keys of the keypad that can be mounted or implemented on the mobile communication terminal is limited. In addition, the number of colors that can be implemented and recognized in the single terminal by the user by intuition is also limited.

Thus, recently, the related art terminals, as well as the mobile communication terminal, can hardly implement a suitable user interface merely with the display color of the display unit or the keypad.

### SUMMARY OF THE INVENTION

The present invention has been made in view of the above-mentioned problem, and it is an object of the invention to provide a terminal having a color changing function that is capable of implementing an effective user interface by changing a color of a keypad, and a color changing method thereof.

One exemplary embodiment of the present invention provides a mobile communication terminal including: a display unit, a key input unit which has a changeable illumination color; and a controller that changes an illumination color of the key input unit according to a theme color of a screen image displayed on the display unit.

Another exemplary embodiment of the present invention provides a mobile communication terminal including: a display unit, a key input unit which has a changeable illumination color; and a controller that changes an illumination color of the key input unit according to a currently executed application.

Still another exemplary embodiment of the present invention provides a mobile communication terminal including: a key input unit which has a changeable illumination color; a memory that stores commands (instructions) according to an illumination color of the key input unit; and a controller that performs a controlling operation according to a command corresponding to an illumination color among the commands stored in the memory when the key input unit is manipulated.

Yet another exemplary embodiment of the present invention provides a method for controlling a mobile communication terminal including: an image changing step of changing an image displayed on a display unit; and an illumination color changing step of changing an illumination color of a key input unit when a theme color of a displayed image is changed.

Another exemplary embodiment of the present invention provides a method for changing color of a mobile communication terminal including: an application changing step of changing an application executed in the terminal; and an application changing step of changing an illumination color of a key input unit according to a currently executed application.

Another exemplary embodiment of the present invention provides a method for controlling a mobile communication terminal including: a command storing step of storing a command according to an illumination color of a key input unit; a key input unit manipulating step of manipulating the key input unit; and a control step of performing a controlling operation according to a command corresponding to an illumination color when the key input unit is manipulated.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic block diagram showing the structure of a mobile communication terminal according to an exemplary embodiment of the present invention.
FIG. 2 is a view showing a mobile communication terminal according to a first exemplary embodiment of the present invention.
FIG. 3 is a view showing some cases in FIG. 2 according to the first exemplary embodiment of the present invention.
FIG. 4 is a view showing a mobile communication terminal according to a second exemplary embodiment of the present invention.
FIG. 5 is a view showing a mobile communication terminal according to a third exemplary embodiment of the present invention.
FIG. 6 is a view showing a mobile communication terminal according to a fourth exemplary embodiment of the present invention.
FIG. 7 is a view showing some cases according to the fourth exemplary embodiment of the present invention.
FIG. 8 is a view showing a method for operating a mobile communication terminal according to a first exemplary embodiment of the present invention.
FIG. 9 is a view showing a method for operating a mobile communication terminal according to a second exemplary embodiment of the present invention.
FIG. 10 is a view showing a method for operating a mobile communication terminal according to a third exemplary embodiment of the present invention.
FIGs. 11A and 11B are views showing some cases of the method for operating a mobile communication terminal according to the third exemplary embodiment of the present invention.

### DETAILED DESCRIPTION OF THE INVENTION

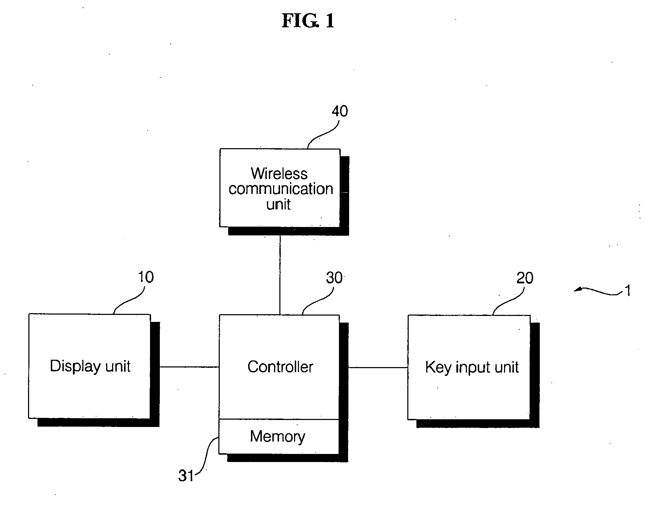

As shown in FIG. 1, a mobile communication terminal 1 according to the present invention includes a display unit 10, a key input unit 20 that can input a command to the mobile communication terminal 1, a controller 30 that controls an image displayed on the display unit 10 and controls the mobile communication terminal 1 according to a control command inputted through the key input unit 20.

The display unit 10, which will be described in detail hereinbelow, can be formed as a display means suitable for implementing a screen of the mobile communication terminal 1 such as an LCD or an OLED, etc. Thus, the display unit 10 includes a touch pad that is able to input a user command or various display means that can be applicable for the mobile communication terminal in the future, in addition to the simple LCD.

Likewise, the key input unit 20, which will be described in detail hereinbelow, can be formed as a keypad or a touch pad and, in addition, may include various command input means that can be applicable for the mobile communication terminal 1 in the future.

In the detailed description of the invention, the performing function of controller 30 will be described, mainly focused on controlling of the display unit 10 and the key input unit 20. As a matter of course, the controller 30 also performs various types of general control functions performed in the mobile communication terminal 1.

In addition, the mobile communication terminal 1 according to the present invention includes a memory 31 that stores applications required for controlling the mobile communication terminal 1 or data. In this case, the memory 31 is not physically discriminated with the controller 30 and can be implemented as a RAM mounted on a chip in which the controller 30 is implemented. Here, the memory 31 is a concept including various types of storage mediums that are currently applied for the mobile communication terminal or that can be applicable for the mobile communication terminal in the future.

A wireless communication unit 40 may provide an interface for wireless communication with a base station through an antenna, and may include a duplex filter that separates transmission/reception signals in an antenna, a power amplifier that amplifies a transmission signal, an up-converter of a transmission path, and a down-converter of a reception path.

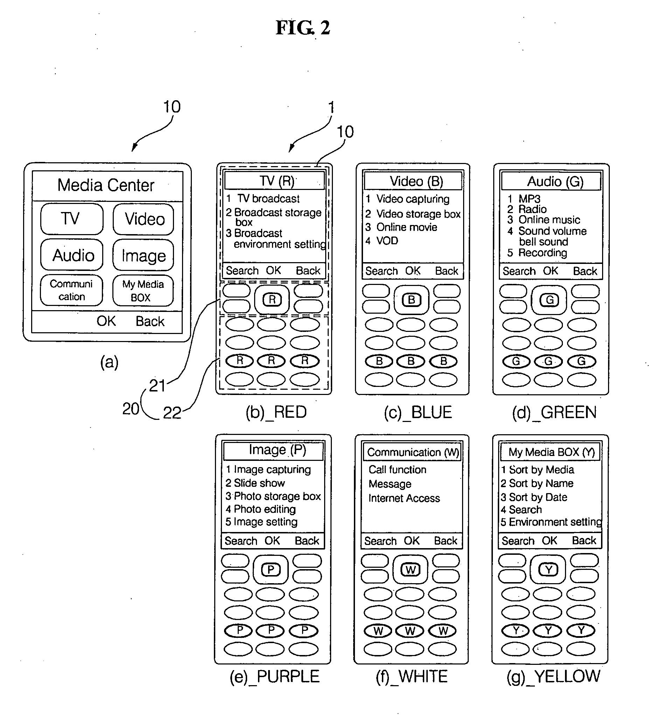

FIG. 2 is a view showing the external appearance of the mobile communication terminal according to a first exemplary embodiment of the present invention.

As shown, the mobile communication terminal according to the first exemplary embodiment of the present invention includes the key input unit 20 and the display unit 10. FIG. 2a shows the display unit 10 displaying menus of various multimedia applications that can be executed by the user of the mobile communication terminal. In case of the mobile communication terminal according to the first exemplary embodiment of the present invention, the user may select the multimedia menus such as TV, Video, Audio, Image, Communication, and My Media Box, etc.

In this case, it is assumed that a dominant tone of the menu screen image is a theme color. The theme color can be a background color of the menu screen image or a color of icons constituting the menu screen image. In general, the icons indicating respective menus are indicated each with a different color so that the user can discriminate each menu or icon through colors by intuition.

For example, in case of TV, a background image of the icon or screen image is red (R). In case of Video, it is blue (B). In case of Audio, it is green (G). In case of Image, it is purple (P). In case of Communication, it is white (W). In case of My Media Box, it is yellow (Y). Namely, the background image of the display unit 10 is differently changed to red, blue, green, purple, white, and yellow according to each select menu.

Thus, according to the menu selected by the user, the color of the key input unit 20 of the mobile communication terminal is changed to be different as shown in FIGs. 2b to 2g. For example, when the user selects the TV icon and executes a TV view function, as shown in FIG. 2b, the display unit 10 displays a sub-menu screen image including several commands related to the TV view. In addition, the key input unit 20 assumes the red illumination color.

In particular, in the present invention, the key input unit 20 may include indicator keys 21 operating as soft keys and standard keys 22 including number keys of 0 to 9 and * and # keys. The user may select the menus displayed on the display unit 10 up and down by manipulating the indicator keys 21. In addition, the user may select a number of a menu displayed on the display unit 10 through the standard keys 22 and execute a corresponding menu..

When a particular menu of the menu screen image (a) is selected through the key input unit 20, the controller 30 displays a sub-menu screen image of the particular menu on the display unit 10. In addition, the controller 30 changes an illumination color of the key input unit 20 according to a background color of the sub-menu screen image. If the TV sub-menu is displayed on the display unit as shown in FIG. 2b, the controller changes the illumination color of the key input unit 20 to red according to the sub-menu.

The key input unit 20 of the mobile communication terminal may be implemented with a keypad and one or more luminous elements (light emitting elements) that provide backlighting to the keypad and have illumination color changing by the controller 30. Thus, immediately when the image displayed on the display unit 10 is changed, the controller 30 transmits a control command according to the changed screen color to the luminous elements to control the luminous elements.

If the luminous elements are LEDs for implementing one or more colors, the controller 30 transmits the control command to the LEDs to implement the same color as the background color of the screen image displayed on the display unit 10. If the luminous elements are constructed such that three LEDs each representing R, G, and B are formed as a set, the controller 30 transmits an ON/OFF command to the three LEDs, respectively to express the background image through the LEDs.

If the key input unit 20 is implemented as the touch pad, the controller 30 directly controls the touch pad, not the luminous elements, to change a background image of the touch pad according to a color of a screen image displayed on the display unit 10.

In the present exemplary embodiment, if colors of every key are turned on whenever the user manipulates keys of the key input unit 20 each time, power consumption of the mobile communication terminal may become problematic.

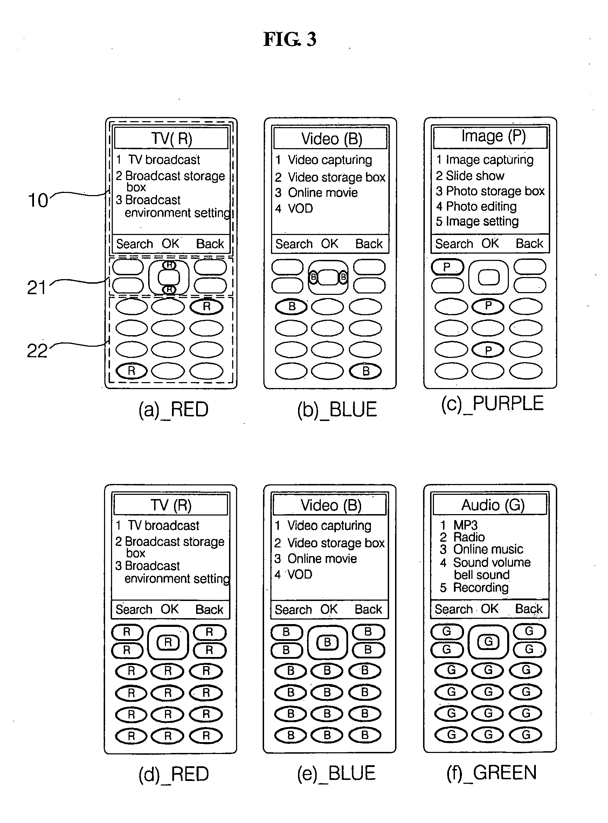

In order to avoid such problem, the mobile communication terminal can be set such that only certain keys of the key input unit 20 may be illuminated as shown in FIGs. 3a to 3c, or the user may set the mobile communication terminal such that every key of the key input unit 20 may be illuminated as shown in FIGs. 3d to 3f..

In addition, the user may control the user interface for the mobile communication terminal as a default such that the illumination color of the key input unit 20 is changed to the same color as a screen image displayed on the display unit 10 or such that the key input unit 20 is illuminated with a color of the same group but with a different brightness or is illuminated with a complementary color according to a setting.

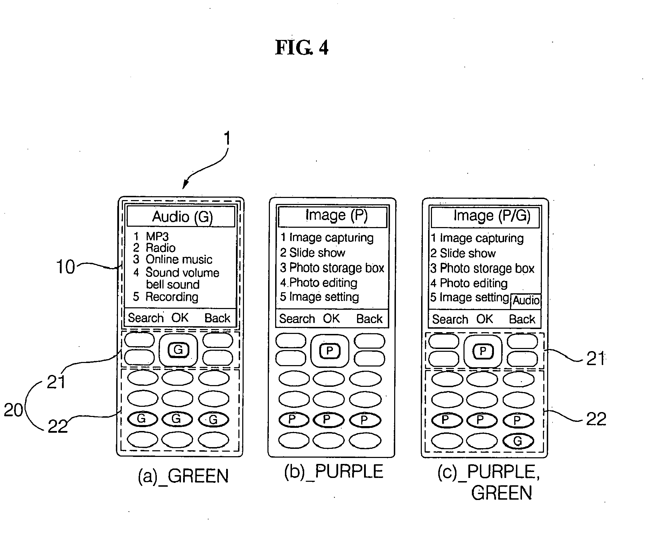

FIG. 4 is a view showing a mobile communication terminal according to a second exemplary embodiment of the present invention.

In the second exemplary embodiment of the present invention, the controller 30 changes the illumination color of the key input unit 20 according to a change in an application executed in the mobile communication terminal. In addition, when two or more multimedia functions are simultaneously performed in the mobile communication terminal, the controller 30 may allow the key input unit 20 to have two or more illumination colors.

For example, if the user of the mobile communication terminal selects the menu 'Audio' , the illumination color of the key input unit 20 is green as shown in FIG. 4a. If the user selects the menu ' Image', the illumination color of the key input unit 20 is purple as shown in FIG. 4b.

When the mobile communication terminal performs the multitasking function, namely, when the user executes an Image view function while listening to a sound source by executing the Audio function, as shown in FIG. 4c, the illumination color of the key input unit 20 is purple and green.

In particular, as shown in FIG. 4c, the Audio icon is expressed at one portion of the display unit 10 to allow the user to recognize that the Audio function is being performed while the Image view function is executed. In this case, however, even if the Audio icon cannot be expressed because of a small display unit 10, the user of the mobile communication terminal can recognize which functions are being performed in the mobile communication terminal through the illumination colors of the key input unit 20.

In this case, as shown, when the screen image displayed on the display unit 10 of the mobile communication terminal is related to the image view function, the illumination color of the key input unit 20 would be mainly purple according to the color of the screen image related to the Image view function, while a particular key of a certain section will be expressed in green, the color related to the Audio function. Accordingly, the user can recognize the Audio function that is being currently performed.

In the secondary exemplary embodiment of the present invention, the key input unit 20 can be implemented as the keypad, the luminous elements or the touch pad in the same manner as those in the first exemplary embodiment of the present invention. Accordingly, the controller 30 may control the respective luminous elements or the touch pad according to an executed application.

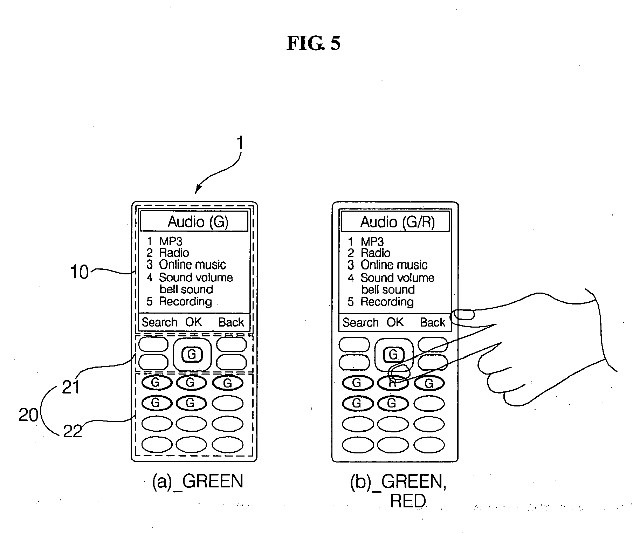

FIG. 5 is a view showing a mobile communication terminal according to a third exemplary embodiment of the present invention.

If the illumination colors of the key input unit 20 of the mobile communication terminal can be changeable, the controller 30 may change the illumination color whenever a command is inputted, so that the user may check (confirm) whether the command has been properly inputted in key manipulation through the key input unit 20.

That is, when the Audio function is executed as shown in FIG. 5a, the key input unit 20 has the green color, which is the same as the background color of the Audio menu. If, however, when the user manipulates a key, the color of the manipulated key is changed to red as shown in FIG. 5b. Accordingly, the user can check which key has been manipulated in the key input unit 20 through the change in the illumination color.

In particular, in case that the key input unit 20 is implemented through the touch pad, in the related art, the user may press the touch pad and then check whether a command has been inputted or not through a changed in the screen image of the display unit 10. Comparatively, however, in the present invention, when the key input unit 20 is implemented through the touch pad, the user can easily check which key has been manipulated through the change in the illumination color.

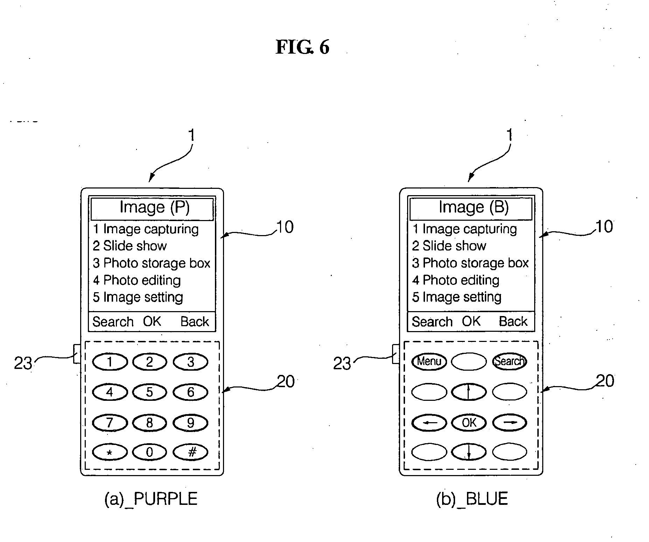

FIG. 6 is a view showing a mobile communication terminal according to a fourth exemplary embodiment of the present invention.

In the fourth exemplary embodiment of the present invention, the controller 30 differently reads a control command corresponding to a key value inputted through the key input unit 20 according to an illumination color of the key input unit 20.

Namely, as shown in FIG. 6a, if the illumination color of the key input unit 20 of the mobile communication terminal 1 is purple, the key input unit 20 is operated as an indicator key. Accordingly, the user can input a command corresponding to the indicator key to the mobile communication terminal through the keypad-type key input unit implemented only with the standard keys.

In this case, a separate side key may be mounted on the mobile communication terminal 10, and the user may simply change the illumination color of the key input unit 20 by manipulating the side key 23.

When the illumination color of the key input unit 20 is changed to blue through manipulation of the side key 23, the key input unit 20 of the mobile communication terminal is operated with standard keys including the number keys 0 to 9 and keys * and # as shown.

IN this case, the memory 31 of the mobile communication terminal stores information regarding a control command corresponding to a key value according to each illumination color. Thus, the controller 30 of the mobile communication terminal may check the illumination color according to manipulation of the side key 23 and read a command inputted through the key input unit 20 as a command inputted through the indicator key or as a command inputted through the standard keys.

FIG. 6 shows the side key 23 as a hard key separately mounted on the side of the mobile communication terminal, but the side key can be also implemented as a soft key which is displayed on the display unit 10 and can be selectable through an arbitrary key manipulation of the key input unit 20.

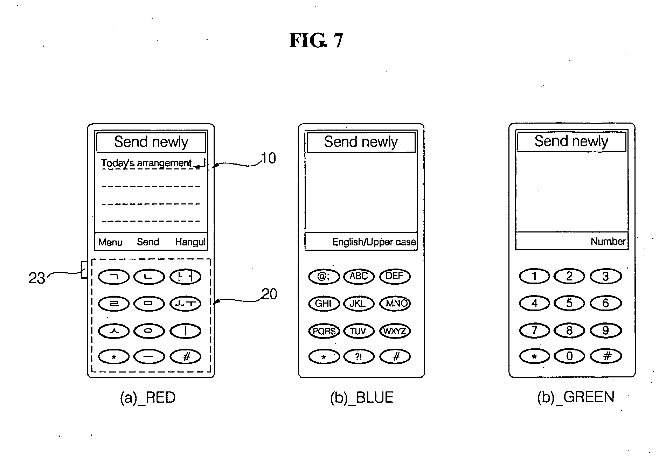

FIG. 7 is a view showing some cases according to the fourth exemplary embodiment of the present invention.

When the user uses the mobile communication terminal, he/she may need to input several types of characters according to circumstances.

In this respect, in case of the related art mobile communication terminal, the user should select a type of a character desired to be inputted by manipulating a separate menu key. Then, information regarding the selected character type is displayed on the display unit.

Comparatively, however, in the present invention, when the user needs to change a type of a character, he/she may simply manipulate the side key 23 to change a control command, namely, a type of an inputted character, corresponding to the key value.

Thus, when the illumination color of the key input unit 20 is red as shown in FIG. 7a, the user may input Hangul in the mobile communication terminal, when blue, the user may input English, and when green, the user may input numbers.

In other words, in case where the user presses a key corresponding to the number 's' of the standard keys, when the illumination color of the key input unit is red as shown in FIG .7a, the controller 30 recognizes the data corresponding to the key value as data corresponding to 'L' in Hangul. Likewise, when blue, the controller 30 recognizes the data as data corresponding to the English alphabet 'a' , and when green, the controller 30 recognizes the data as data corresponding to the number '2'.

In this case, the 'data' recognized by illumination color by the controller 30 can be considered as sort of a 'control command' read by the controller 30. In this manner, the controller 30 reads differently the control command according to the illumination color.

In the present exemplary embodiment, a command inputted through the keypad or the touch pad is different according to the illumination color. However, in case of the touch screen, it can be implemented such that each different command input key is displayed on the touch screen according to illumination colors. Also, the user may control the illumination color to display a different set of command input keys on the touch screen to input a command to the mobile communication terminal. Various embodiments related to this would also fall within the scope of the present invention.

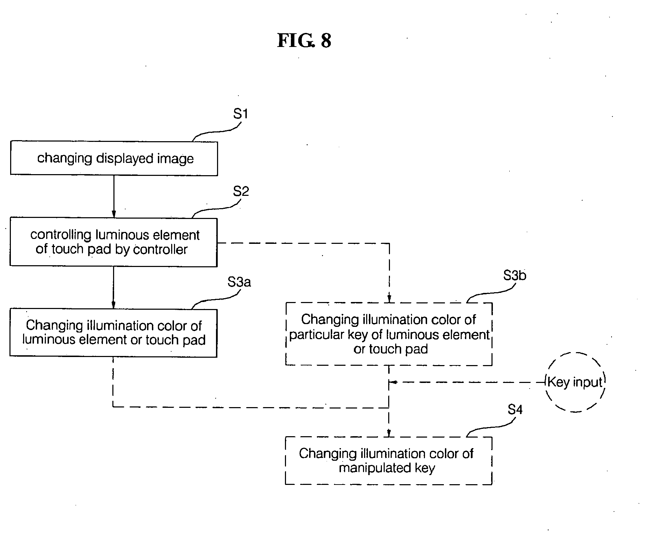

FIG. 8 is a view showing a method for operating a mobile communication terminal according to a first exemplary embodiment of the present invention.

As shown, when the screen image of the mobile communication terminal is changed (S1), the color of the displayed screen image is also changed.

Accordingly, the controller controls the luminous elements of the key input unit or the touch pad (S2) to change the overall illumination color of the key input unit (S3a).

In this case, when the screen image of the mobile communication terminal is changed, the key input unit can be changed to have the same color as a background color of the screen image or have a color of the same group. Also, the mobile communication terminal can be set such that the illumination color of the key input unit is changed whenever the menu screen image is changed, rather than that the illumination color of the key input unit is changed at every screen image as necessary.

For example, in the first exemplary embodiment of the present invention as shown in FIG. 2, the illumination color can be set to be changed according to menus. Accordingly, whenever the menus are changed, the illumination color of the key input unit 20 is changed, while if a sub-menu screen image of the single menu is changed, the illumination color of the key input unit 20 is maintained to be the same.

In addition, the illumination color of every key of the mobile communication terminal may not be changed but only an illumination color of a particular key can be changed in terms of preventing power consumption (S3b).

Meanwhile, when the user of the mobile communication terminal inputs a certain key as necessary, an illumination color of the corresponding key can be changed to allow the user to check whether or not the certain key has been inputted (S4).

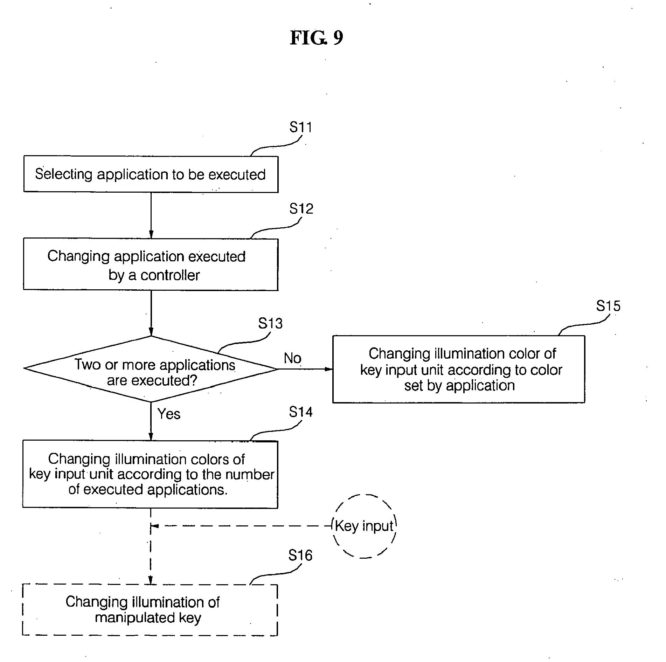

FIG. 9 is a view showing a method for operating a mobile communication terminal according to a second exemplary embodiment of the present invention.

As shown in FIG. 9, when the user of the mobile communication terminal selects an application executable in the mobile communication terminal (S11), the application executed by the controller of the mobile communication terminal becomes different (S12).

When two or more applications are simultaneously executed (S13), the controller of the mobile communication terminal may control the luminous elements or the touch pad to allow the key input unit to have the illumination colors corresponding to the number of executed applications (S14).

If, however, two or more applications are not executed simultaneously, the controller of the mobile communication terminal changes the overall illumination color of the key input unit according to each color set for each application (S15). In this case, as a matter of course, the color of each application can be changed by the user as necessary.

Likewise as in the first exemplary embodiment of the present invention, in the second exemplary embodiment of the present invention, when the user manipulates a particular key, an illumination color of the particular key can be changed to allow the user to check whether the key manipulation has been properly made (S16).

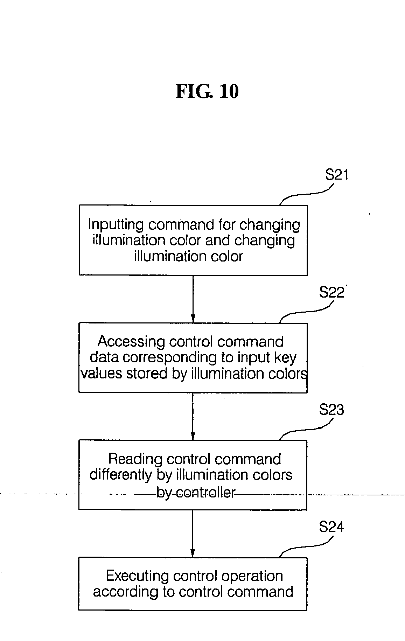

FIG. 10 is a view showing a method for operating a mobile communication terminal according to a third exemplary embodiment of the present invention.

First, the user of the mobile communication terminal may input a command for changing an illumination color by manipulating the side key, and in this case, the illumination color of the key input unit is changed according to the change command (S21).

Next, when a certain key is manipulated, the controller accesses a control command corresponding to a stored input key value (S22). In this case, there can be a default value of the stored control command which was set when the mobile communication terminal was fabricated, but as necessary, the user of the mobile communication terminal may set or change illumination colors of each control command.

The controller reads a control command differently by illumination color according to accessed control command data (S23), and accordingly, performs a different control operation (S24).

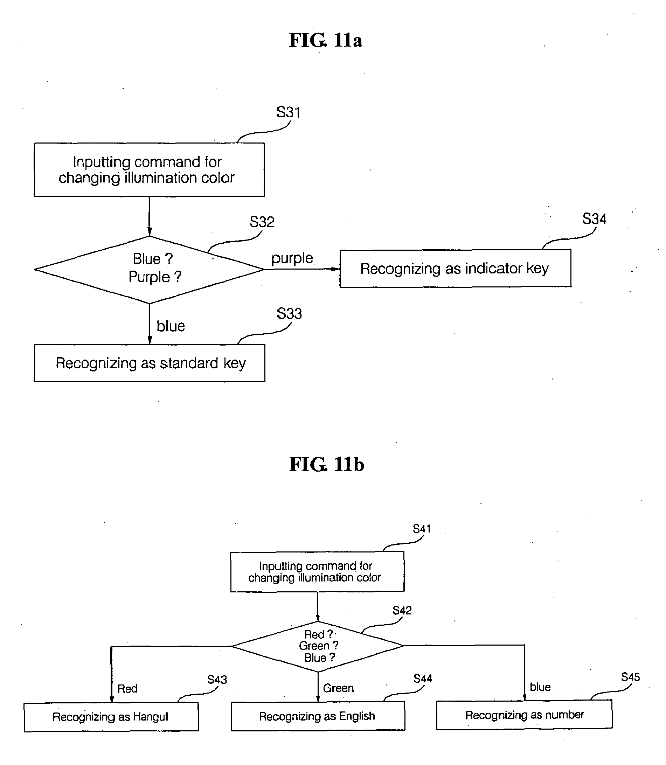

FIGs. 11A and 11B are views showing some cases of the method for operating a mobile communication terminal according to the third exemplary embodiment of the present invention.

As shown, when the user inputs a command for changing an illumination color by manipulating the separate side key, the controller checks a changed illumination color of the key input unit (S32). If the color is purple, the controller recognizes that the keys of the key input unit are operated as the indicator keys and performs a corresponding control command (S33). If the color is blue, the controller recognizes that the keys of the key input unit are operated as standard keys and performs a corresponding control command (S34).

If the user inputs a command for changing an illumination color while creating a text message or a menu (S41), the controller checks a changed illumination color of the key input unit (S42). If the color is red, the controller recognizes that a character inputted through the key input unit is Hangul (S43). If the color is blue, the controller recognizes that the character inputted through the key input unit is English (S44), and if green, the controller recognizes that the character inputted through the key input unit is numbers (S45).

Accordingly, by changing the illumination colors of the key input unit of the mobile communication terminal, the commands that can be inputted t the mobile communication terminal can be eventually diversified and the key input unit can be simplified.

The features of the present invention have been described in terms of a mobile communication terminal. However, it can be understood that the concepts and features of the present invention can also be applicable to various types of electronic device that includes a key input unit, a display unit and a controller, and thus, an MP3 player, a PDA, etc. would also fall within the scope of the present invention.

The present invention can be implemented with codes that can be read by a processor of the mobile communication terminal in a recording medium that can be read by the processor. The recording medium that can be read by the processor includes every type of recording devices storing data that can be read by the processor. The recording medium that can be read by the processor can be, for example, a ROM, a RAM, a CD-ROM, a magnetic tape, a floppy disk, an optical data storage device, etc., and can be also implemented in the form of carrier waves such as a transmission or the like through the Internet. The recording medium that can be read by the processor is distributed in computer systems connected with a network and a code that can be read by the processor can be stored and executed in the distributed manner.

As described above, the terminal having the color changing function and its color changing method according to the present invention have such advantages that because the illumination colors of the key input unit are changed, the user can recognize an operation state of the terminal by intuition through the illumination colors. In addition, by simplifying the key arrangement of the key input unit, the terminal can become more compact.

While the invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A mobile communication terminal comprising:
a display unit;
a key input unit having a changeable illumination color; and
a controller that changes an illumination color of the key input unit according to a theme color of a screen image displayed on the display unit.

2. The terminal of claim 1, wherein the controller changes an illumination color of a set key of the key input unit according to the theme color.

3. The terminal of claim 1, wherein the key input unit comprises:
a key pad; and
one or more luminous elements that provide backlighting to the key pad and have the illumination color changing according to the theme color.

4. The terminal of claim 1, wherein the key input unit is formed as a touch pad, and the controller controls the touch pad to change an illumination color of the touch pad according to the theme color.

5. The terminal of claim 1, wherein the controller controls the display unit to make the theme color different according to an application.

6. A mobile communication terminal comprising:
a display unit,
a key input unit which has a changeable illumination color; and
a controller that changes an illumination color of the key input unit according to a currently executed application.

7. The terminal of claim 6, wherein when at least two applications are executed, the controller controls the key input unit such that the key input unit has at least two illumination colors.

8. The terminal of claim 6, wherein the key input unit comprises:
a key pad; and
one or more luminous elements that provide backlighting to the key pad and have the illumination color changing according to a change in the executed application by the controller.

9. The terminal of claim 6, wherein the key input unit is formed as a touch pad, and the controller controls the touch pad to change an illumination color of the touch pad according to a change in the executed application.

10. The terminal of claim 6, wherein the application is one of a TV view application, a video view application, an audio listen application, a camera-related application, a wired/wireless communication application.

11. The terminal of claim 6, wherein when at least two applications are executed, the controller displays an executed screen image of the first application and an icon indicating that a second application is being executed on the display unit.

12. The terminal of claim 11, wherein the illumination color of the key input unit comprises at least a theme color of the first application executed screen image and the icon color.

13. A mobile communication terminal comprising:
a key input unit which has a changeable illumination color;
a memory that stores commands according to an illumination color of the key input unit; and
a controller that performs a controlling operation according to a command corresponding to an illumination color among the commands stored in the memory when the key input unit is manipulated.

14. The terminal of claim 13, wherein the key input unit comprises:
a key pad; and
one or more luminous elements that emit light with one or more colors to provide backlighting to the keypad.

15. The terminal of claim 13, wherein the key input unit includes a command key that inputs an illumination color change command, and the controller changes an illumination color of the luminous elements according to manipulation of the command key.

16. The terminal of claim 13, wherein the keypad has a standard key mode in which numbers or characters can be inputted and a navigation function key mode in which a direction can be inputted according to an illumination color.

17. The terminal of claim 13, wherein when the terminal is in a text editing mode, types of inputted languages are different according to illumination colors of the key input unit.

18. A method for controlling a mobile communication terminal having a color changing function, comprising:
an image changing step of changing an image displayed on a display unit; and
an illumination color changing step of changing an illumination color of a key input unit when a theme color of a displayed image is changed.

19. The method of claim 18, wherein, in the illumination color changing step, an illumination color of a set key of the key input unit is changed according to the theme color.

20. The method of claim 18, wherein, in the image changing step, when an executed application is changed, the theme color of the displayed image is changed.

21. A method for changing color of a mobile communication terminal having a color changing function, comprising:
an application changing step of changing an application executed in the terminal; and
an application changing step of changing an illumination color of a key input unit according to a currently executed application.

22. The method of claim 21, wherein when at least two applications are executed in the terminal, the key input unit has at least two illumination colors.

23. The method of claim 21, wherein the application is one of a TV view application, a video view application, an audio listen application, a camera-related application, a wired/wireless communication application.

24. The method of claim 21, further comprising:
displaying an executed screen image of a first application and an icon indicating that a second application is being executed on a display unit, when at least two applications are executed in the terminal.

25. The method of claim 24, wherein the illumination color of the key input unit changed in the illumination color changing step comprises at least a theme color of the first application executed screen image and the icon color.
